# EUROPEAN PATENT APPLICATION

(11) **EP 3 518 194 A1**
(43) Date of publication of application: **31.07.2019**
(21) Application number: 17882287.0
(22) Date of filing: 22.12.2017
(51) Int. Cl.: G07F 17/12, H02J 7/35

(54) **MULTI-FUNCTIONAL LIFE SERVICE STATION**

(30) Priority: 11.12.2017 CN 201711311295
(71) Applicant: Beijing Apollo Ding Rong Solar Technology Co., Ltd., Beijing 100176 (CN)
(72) Inventor: The designation of the inventor has not yet been filed
(74) Representative: Casalonga
(86) International application number: PCT/CN2017/117927
(87) International publication number: WO 2019/114025

(57) **Abstract**

A multifunctional life service station comprises a plurality of functional cabinets connected to each other as a whole structure, and a solar battery (1); the functional cabinets comprise a smart courier cabinet (2), a vending cabinet (3), a self-service charging cabinet (4), and a distribution control cabinet (5); the distribution control cabinet (5) is equipped with an energy storage unit, a distributor and a controller; the controller is electrically connected to the energy storage unit and the distributor respectively; the energy storage unit is used to store the electric energy generated by the solar battery (1) and to provide power for each functional cabinet via the distributor; the controller is used to detect the power of the energy storage unit in real time, and to trigger the distributor to switch to municipal power to supply energy to each functional cabinet when the power of the energy storage unit is low.

## Description

### TECHNICAL FIELD

The present disclosure relates to the living facility field, and in particular, to a multifunctional life service station.

### BACKGROUND

Self-service express cabinets, also known as smart courier cabinets, are a kind of self-service equipment set up in public places for people to deliver and pick up expresses. Express cabinets can identify, temporarily store, monitor and manage express parcels; combined with smart terminals and Internet of Things, express cabinets have made it more convenient for logistics companies and individual users to send and receive expresses.

However, existing express cabinets all use municipal power. Once a municipal power line fails or when a power outage occurs, the express cabinets will be out of action. These situations will bring inconvenience to users and may cause a security loophole that the contents of the cabinets may be damaged or lost. In addition, the express cabinets often have only one function and are not connected to other living facilities. For example, multiple residential facilities are often set up in isolation in a residential area. These facilities are not only scattered in spatial location, making it inconvenient for people to use, but they are also each consume the municipal power at low efficiency, causing resources to be wasted.

### SUMMARY

The purpose of the present disclosure is to provide a multifunctional life service station that combines multiple living facilities. Adopting the environmentally friendly solar power supply in combination with municipal power, the multifunctional life service station effectively reduces energy consumption while providing multiple life services in a one-stop means.

The present disclosure adopts the following technical solutions:
A multifunctional life service station, comprising a plurality of functional cabinets connected to each other as a whole structure, and a solar battery laid on the multifunctional life service station;
The functional cabinet comprises a smart courier cabinet, a vending cabinet, a self-service charging cabinet, and a distribution control cabinet;
The distribution control cabinet comprises an energy storage unit, a distributor and a controller;
The solar battery is electrically connected to the energy storage unit; the energy storage unit is electrically connected with the distributor, meanwhile the distributor is electrically connected with the municipal power; the controller is electrically connected to the energy storage unit and the distributor respectively;
The energy storage unit is used to store the electric energy generated by the solar battery and to provide power for each functional cabinet via the distributor;
The controller is used to detect the power of the energy storage unit in real time, and to trigger the distributor to switch to municipal power to supply energy to each functional cabinet when the power of the energy storage unit is low.

Preferably, the multifunctional life service station further comprises a distress alert system;
The distress alert system comprises a processor installed in the multifunctional life service station and electrically connected to an alarm handling platform, and an alarm trigger unit and an alerter installed on the multifunctional life service station;
The processor is electrically connected to the alarm trigger unit and the alerter respectively;
After detecting that the alarm trigger unit is triggered, the processor will activate the alerter to send an alert signal and will send an alert message to the alarm handling platform.

Preferably, the multifunctional life service station further comprises a video surveillance device; the video surveillance device sends collected video data to the processor.

Preferably, the multifunctional life service station is equipped with an LED light strip for lighting.

Preferably, the multifunctional life service station further comprises a light sensor connected to the controller; the light sensor is used to detect the brightness of ambient light;
The LED light strip is electrically connected to controller;
The controller is further configured to trigger the LED light strip to turn on or off according to a brightness signal detected by the light sensor.

Preferably, the distributor is a contactor.

Preferably, the self-service charging cabinet is equipped with a wireless hotspot device.

Preferably, the multifunctional life service station further comprises a touch display screen, and the touch display screen is used to display information of multiple life services.

Preferably, the touch display screen is electrically connected to the controller; the touch display screen is further used to display power distribution information of the multifunctional life service station.

Preferably, the vending cabinet is a touch-screen vending cabinet, and the touch screen of the touch-screen vending cabinet is integrated with the touch display screen.

The multifunctional life service station provided by the present disclosure and the preferred embodiments thereof use a solar battery as the main power supply circuit and the municipal power as an auxiliary circuit. In this way, energy consumption can be effectively reduced, and there will be double reassurance in the power supply of the multifunctional life service station. Moreover, the integration of a vending cabinet and a self-service charging cabinet into the multifunctional life service station allows for more abundant and convenient services, thereby demonstrating the design concept of providing one-stop multiple life services.

### BRIEF DESCRIPTION OF THE DRAWINGS

In order to make the purpose, the technical solutions, and the advantages of the present disclosure more clear, the present disclosure will be further described below with reference to the accompanying drawings, wherein:
Figure 1 illustrates the multifunctional life service station provided by embodiments of the present disclosure;
Figure 2 illustrates the electrical connection of the multifunctional life service station provided by embodiments of the present disclosure.

**Description of reference signs in the drawings:**

| | | |
|---|---|---|
| 1 - Solar battery | 2 - Smart courier cabinet | 3 - Vending cabinet |
| 4 - Self-service charging cabinet | 5 - Distribution control cabinet | |
| 6 - LED light strip | 7 - Light sensor | |

### DETAILED DESCRIPTION

Embodiments of the present disclosure will be described in detail below. Examples of the embodiments are illustrated in the accompanying drawings. The same or similar reference signs herein represent the same or similar elements or elements having the same or similar functions. The embodiments described below with reference to the accompanying drawings are merely examples used to explain the present disclosure, and should not be construed as limitations to the present disclosure.

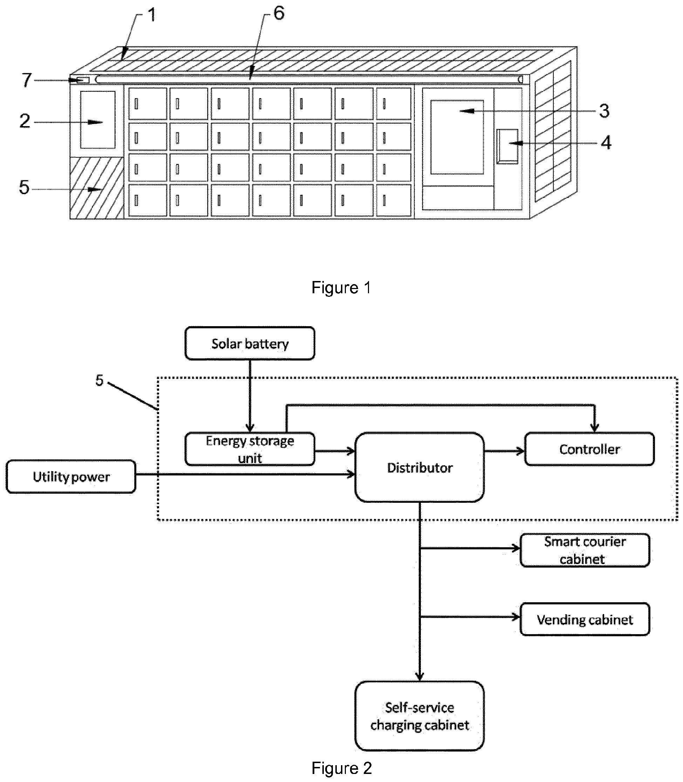

Embodiments of the present disclosure provides a multifunctional life service station, as shown in Figure 1, which comprises a plurality of functional cabinets connected to each other as a whole structure, and a solar battery 1 laid on the multifunctional life service station. It should be noted that, firstly, in the whole structure, the plurality of functional cabinets can be arranged in a row as shown in Figure 1, or can be arranged into other reasonable spatial shapes according to the number and size of the functional cabinets; secondly, the solar battery 1 can be laid on the top of or the lateral side of the multifunctional life service station, where it is more convenient to collect sunlight; in addition, the solar battery 1 may be a crystalline silicon battery, a flexible film, etc., which is not limited by the present disclosure.

The aforementioned functional cabinets may comprise a smart courier cabinet 2, a vending cabinet 3, a self-service charging cabinet 4 that is used to charge the smart terminals, and a distribution control cabinet 5. Of course, if there is enough space, a water dispenser cabinet, a small shared goods cabinet, a fruit juice squeezer cabinet, a ticket exchange cabinet and a wireless hotspot cabinet may also be added. Since providing a wireless hotspot only requires a wireless router with broadband access, and does not require an extra cabinet, in a preferred embodiment of the present disclosure, the wireless hotspot device is installed in the self-service charging cabinet 4.

Specifically with the distribution control cabinet 5, there may be an energy storage unit, a distributor and a controller in the distribution control cabinet 5. Regarding to the electrical connection of the distribution control cabinet, referred to Figure 2, the solar battery 1 is electrically connected to the energy storage unit, which is used to store the electric energy generated by the solar battery and output the electric energy to the functional cabinets in the normal state. Therefore, the energy storage unit may be a rechargeable lithium-ion battery, a conventional storage battery, etc. In addition, the energy storage unit is electrically connected with the distributor, meanwhile the distributor is electrically connected with the municipal power, and the controller is electrically connected to the energy storage unit and the distributor respectively. The controller not only uses the power of the energy storage unit, but also detects the power of the energy storage unit in real time. When the power of the energy storage unit is low, for example, at less than 20%, the controller will trigger the distributor to switch the power supply source of the functional cabinets from the energy storage unit to municipal power. It can be seen that in the present disclosure, the environmentally friendly solar battery is used as a main power source, complemented by the municipal power as an auxiliary power source, and the two power supply modes are switched by the controller and the distributor. Thus in practical operation, a conventional PLC with a UPS can be used as a controller, and various types of distributors may also be used, such as an electronic switch, a relay, or a contactor etc. In another embodiment of the present disclosure, a contactor is used as the distributor, and the electrical connection mode may also be varied and is not limited by the present disclosure. For example, the energy storage unit is connected to a normally closed circuit of the contactor, a municipal power line is connected to the main circuit of the contactor, and the output end of the controller is electrically connected to the coil of the contactor. It may also be added that persons skilled in the art can understand that the municipal power is usually alternating current, and the power provided by the solar battery is usually direct current, and whether to choose alternating current power supply or direct current power supply depends on the specific power distribution requirements of the functional cabinets. For example, if alternating current is required, an inverter can be added to change the direct current before it is output to the functional cabinets; conversely, a rectifier can be added. These are general settings in the electrical field, which the present disclosure will not elaborate. It may also be added that the controller can be independent of other functional cabinets, and a control module in a control system of other functional cabinets may also be integrated with the controller in the power distribution control cabinet 5.

Referred to Figure 1 again, in the present embodiment, the multifunctional life service station further comprises a light strip for lighting. In practical operation, a fluorescent lamp or an LED lamp may be used. For the purpose of ensuring light brightness and reducing energy consumption, a LED light strip 6 is preferably used. It should be noted that the power supply mode of the LED light strip 6 is not limited by the present disclosure. It may be powered by the energy storage unit or be directly connected to the solar battery; and certainly, it may be connected to the circuit of a functional cabinet and share a power source with the functional cabinet. In addition, the light strip may be turned on at all times, so that it can attract users' attention at any time. Or for the sake of energy conservation, a light sensor 7 may be further provided on the multifunctional life service station in order to detect the brightness of ambient light. The light sensor can convert the current photometric value into a voltage signal, and can perform better if it is installed on the upper part or top of the multifunctional life service station. With respect to electrical connection, the light sensor 7 and the LED light strip 6 may be electrically connected to the controller respectively, so that the controller can trigger the LED light strip to turn on or off according to the brightness signal of the ambient light detected by the light sensor.

In another preferred embodiment of the present disclosure, the multifunctional life service station further comprises a distress alert system. The distress alert system comprises a processor installed in the multifunctional life service station and electrically connected to an alarm handling platform, and an alarm trigger unit and an alerter installed on the multifunctional life service station. The alarm handling platform refers to a monitoring system set up in police stations, security rooms, and community hospitals. Therefore, a wireless communication method may be adopted for the electrical connection between the processor and the alarm handling platform, and the processor may also be integrated with the controller. In addition, the processor is electrically connected to the alarm trigger unit and the alerter respectively. After detecting that the alarm trigger unit is triggered, the processor will activate the alerter to send an alert signal and will send an alert message to the alarm handling platform. The alarm trigger unit herein may be a button or a rotary switch with a call function, and the alerter may be an audible and visual alarm. Based on this embodiment, it may also be considered to set up a video surveillance device, such as a camera or a tracking image acquisition instrument, on the multifunctional life service station. The video surveillance device may send the collected video data to the processor, so that the processor may send the video data around the multifunctional service station to the alarm handling platform. Of course, persons skilled in the art can understand that the video surveillance device can be electrically connected to the respective systems of the smart courier cabinet, the vending cabinet and the self-service charging cabinet to obtain images of users using the above functional cabinets, so as to facilitate the tracking and checking of the using information of the functional cabinets.

The purpose of adding a distress alert system to the multifunctional life service station is to make it easier for passersby to notify the alarm handling platform at the nearest multifunctional life service station in the case of an emergency, such as an unlawful attack or a sudden disease. Moreover, the broadcast effect of the alerter may stop the attacker from attacking or attract the attention of other persons, so that they can provide timely assistance.

In addition, in yet another preferred embodiment of the present disclosure, the multifunctional life service station further comprises a touch display screen for displaying the information of multiple life services, such as a map service, an advertisement, a notice for missing persons or lost items, and other handy services for the public. More preferably, the touch display screen may be electrically connected to a controller or a control system of the smart courier cabinet, so that the touch display screen may also display the operative condition of the multifunctional life service station, such as power distribution information, the power of the energy storage unit, or information of an express items, etc.

The touch display screen may be installed on the back or lateral side of the multifunctional life service station. However, if there are only a few people passing by from the back or lateral side of the multifunctional life service station due to its location, it may be considered to integrate the touch display screen with the functional cabinets. For example, in yet another preferred embodiment of the present disclosure, the vending cabinet is a touch-screen vending cabinet; therefore, the touch display screen can be integrated with the touch screen of the touch-screen vending cabinet, which is used to select a merchandise. In this way, users can purchase goods, or check or inquire about life service information on one screen.

The structure, features, and effects of the present disclosure are described in detail above with reference to the embodiments shown in the drawings. However, the above embodiments are merely some preferred embodiments of the present disclosure. It should be stated that, the technical features involved in the above embodiments and their preferred modes can be reasonably combined into multiple equivalent solutions without departing from or changing the design ideas and technical effects of the present disclosure. Therefore, the present disclosure is not limited to the embodiments shown in the drawings. Any changes made according to the concept of the present disclosure or any equivalent embodiments that are modified to equivalent variations without departing from the spirit of the description and the drawings, should still fall within the protection scope of the present disclosure.

## Claims

1. A multifunctional life service station, **characterized in that** the multifunctional life service station comprises a plurality of functional cabinets connected to each other as a whole structure, and a solar battery laid on the multifunctional life service station;
the functional cabinet comprises a smart courier cabinet, a vending cabinet, a self-service charging cabinet, and a distribution control cabinet;
the distribution control cabinet comprises an energy storage unit, a distributor and a controller;
the solar battery is electrically connected to the energy storage unit; the energy storage unit is electrically connected with the distributor, meanwhile the distributor is electrically connected with the municipal power; the controller is electrically connected to the energy storage unit and the distributor respectively;
the energy storage unit is used to store the electric energy generated by the solar battery and to provide power for each functional cabinet via the distributor;
the controller is used to detect the power of the energy storage unit in real time, and to trigger the distributor to switch to municipal power to supply energy to each functional cabinet when the power of the energy storage unit is low.

2. The multifunctional life service station according to claim 1, **characterized in that** the multifunctional life service station further comprises a distress alert system;
the distress alert system comprises a processor installed in the multifunctional life service station and electrically connected to an alarm handling platform, and an alarm trigger unit and an alerter installed on the multifunctional life service station;
the processor is electrically connected to the alarm trigger unit and the alerter respectively;
after detecting that the alarm trigger unit is triggered, the processor will activate the alerter to send an alert signal and will send an alert message to the alarm handling platform.

3. The multifunctional life service station according to claim 2, **characterized in that** the multifunctional life service station further comprises a video surveillance device; the video surveillance device sends collected video data to the processor.

4. The multifunctional life service station according to claim 1, **characterized in that** the multifunctional life service station is equipped with an LED light strip for lighting.

5. The multifunctional life service station according to claim 4, **characterized in that** the multifunctional life service station further comprises a light sensor connected to the controller; the light sensor is used to detect the brightness of ambient light;
the LED light strip is electrically connected to the controller;
the controller is further configured to trigger the LED light strip to turn on or off according to the brightness signal detected by the light sensor.

6. The multifunctional life service station according to any one of claims 1-5, **characterized in that** the distributor is a contactor.

7. The multifunctional life service station according to any one of claims 1-5, **characterized in that** the self-service charging cabinet is equipped with a wireless hotspot device.

8. The multifunctional life service station according to any one of claims 1-5, **characterized in that** the multifunctional life service station further comprises a touch display screen, and the touch display screen is used to display the information of multiple life services.

9. The multifunctional life service station according to claim 8, **characterized in that** the touch display screen is electrically connected to the controller and is further used to display power distribution information of the multifunctional life service station.

10. The multifunctional life service station according to claim 8, **characterized in that** the vending cabinet is a touch-screen vending cabinet, and the touch screen of the touch-screen vending cabinet is integrated with the touch display screen.
